(19) Europäisches Patentamt

European Patent Office

Office européen des brevets

(11) **EP 0 840 412 A1**

(12) ## DEMANDE DE BREVET EUROPEEN

(43) Date de publication:
**06.05.1998 Bulletin 1998/19**

(51) Int Cl.⁶: **H01S 3/17**, C03C 4/00

(21) Numéro de dépôt: **97402564.5**

(22) Date de dépôt: **29.10.1997**

(84) Etats contractants désignés:
**AT BE CH DE DK ES FI FR GB GR IE IT LI LU MC NL PT SE**

(30) Priorité: **31.10.1996 FR 9613327**

(71) Demandeur: **FRANCE TELECOM**
**75015 Paris (FR)**

(72) Inventeurs:
• **Auzel, François**
  **78320 Mesnil Saint-Denis (FR)**
• **Morin, Denise**
  **94130 Nogent-sur-Marne (FR)**

(74) Mandataire: **Le Forestier, Eric**
**Cabinet Regimbeau,**
**26, avenue Kléber**
**75116 Paris (FR)**

(54) **Procédé de fabrication d'un matériau vitreux dopé et destiné à l'amplification d'ondes optiques ou lasers**

(57) L'invention concerne un procédé de fabrication d'un matériau vitreux dopé par au moins une terre rare à une concentration atomique ($c_o$) et destiné à être utilisé, en particulier, pour l'amplification d'ondes optiques ou lasers.

**Description**

L'invention a pour objet un procédé de fabrication d'un matériau vitreux dopé par au moins une terre rare. Elle vise également le matériau vitreux susceptible d'être obtenu par ce procédé ainsi que son utilisation pour l'amplification d'ondes optiques ou la réalisation de lasers.

Au sens de la présente invention, on entend par "dopage", l'adjonction d'une substance modifiant ou exaltant considérablement certaines propriétés, notamment certaines propriétés optiques.

On connaît des procédés de fabrication d'un matériau vitreux destiné à l'amplification d'ondes optiques ou à la réalisation de lasers. Ces procédés connus consistent essentiellement à mélanger ensemble les constituants du matériau vitreux avec des oxydes ou des fluorures d'éléments dopants. Le mélange est mis en fusion, puis refroidi pour former le matériau vitreux solide.

En général, selon ces procédés connus, on utilise des oxydes de formule $X_2O_3$ et des fluorures de formule $XF_3$, où X représente une terre rare.

Cette technique antérieure est notamment illustrée par deux cent cinquante exemples de compositions provenant de onze compagnies verrières issues de quatre pays différents. Les exemples sont rapportés dans la référence S.E. Stokowski, R.A. Saroyan, and M.J. Weber, "Nd-doped laser glass, Spectroscopic and Physical properties", Lawrence Livermore National Laboratory, University of California, Livermore, California, 1 & 2 (1988).

Cet ouvrage de référence décrit différents verres destinés à être utilisés pour des dispositifs lasers. Il s'agit de verres du type phosphate, silicate, fluorophosphate, fluorobéryllate, borate, borosilicate et fluorozirconate. Tous les dopages réalisés dans cette référence mettent en oeuvre l'élément dopant sous forme d'oxyde ou de fluorure dans le mélange de départ. En particulier, de nombreux exemples utilisent $Nd_2O_3$ ou $NdF_3$.

Les procédés connus procurent un matériau vitreux aux propriétés optiques essentiellement satisfaisantes lorsqu'ils contiennent une faible quantité d'éléments dopants. On estime généralement que la concentration limite maximale se situe aux alentours de $10^{18}$ à $10^{20}$ atomes par centimètre cube ($cm^{-3}$).

Ainsi, ces procédés conviennent généralement à la fabrication de verres lasers massifs dont les dimensions sont supérieures à quelques centimètres et inférieures à quelques mètres.

Toutefois, ces propriétés optiques se dégradent lorsqu'on augmente la concentration en éléments dopants au-delà de $10^{18}$ à $10^{20}$ $cm^{-3}$. En particulier, on observe une dégradation notable du gain optique de ce matériau pour une concentration en éléments dopants supérieure à $10^{20}$ $cm^{-3}$, la concentration minimale, lorsqu'ils sont traversés par des ondes dont le chemin optique est inférieur à quelques centimètres.

On observe également une importante dégradation de ce gain pour une concentration en éléments dopants supérieure à $10^{18}$ $cm^{-3}$ et des chemins optiques de quelques mètres déjà.

Par conséquent, les procédés connus à ce jour sont difficilement utilisables, par exemple, pour fabriquer un matériau vitreux destiné à être mis en oeuvre dans des amplificateurs en guide d'ondes de faible longueur.

En effet, dans cette application spécifique, il conviendrait de compenser une longueur active courte, de quelques centimètres, par une concentration élevée en éléments dopants, pour obtenir des propriétés physiques et optiques satisfaisantes.

De la même façon, les procédés connus à ce jour sont difficilement utilisables pour fabriquer un matériau vitreux constitutif d'amplificateurs à fibres sous forte excitation. En effet, les interactions entre ions actifs donnent lieu à des pertes non linéaires augmentant avec l'excitation. Il en est de même, dès que l'on souhaite associer une grande longueur active et une concentration élevée en éléments dopants.

Il existe donc un besoin de fournir un procédé qui procure un matériau vitreux dopé présentant des propriétés optiques améliorées, et cela surtout pour une forte concentration en éléments dopants.

On y parvient, selon l'invention, au moyen d'un procédé de fabrication d'un matériau vitreux dopé par au moins une terre rare à une concentration atomique ($c_0$) comprenant les opérations consistant à :

(1) mélanger entre elles

(i) une première composition comprenant les constituants nécessaires à la fabrication d'un matériau vitreux, et
(ii) une deuxième composition contenant au moins un composé comprenant la ou les terre(s) rare(s),

(2) mettre en fusion le mélange obtenu, et
(3) faire refroidir le mélange fondu, selon les techniques verrières classiques,

ledit ou lesdits composé(s) contenu(s) dans la deuxième composition présentant une distance minimale ($d_{min}$) entre les atomes de terres rares supérieure à 3,7 Å, et de préférence comprise entre 5 et 20 Å.

Par conséquent, le procédé selon l'invention met en oeuvre, comme composé de départ renfermant l'élément dopant, non pas un simple oxyde ou fluorure, mais un composé présentant une propriété physique bien particulière.

Le fait de respecter cette propriété physique du matériau de départ renfermant l'élément dopant exclut forcément l'utilisation d'oxyde ou de fluorure simple de type $X_2O_3$ ou $XF_3$. En effet, les distances entre les éléments X, dans ces composés, sont inférieures à la distance minimale ($d_{min}$) requise.

Donc, en aucun cas, le procédé conforme à l'invention ne peut mettre en oeuvre les mêmes composés de départ que les procédés selon l'art antérieur. En ce sens, il se distingue absolument des procédés connus à ce jour.

Par ailleurs, la Demanderesse propose d'opérer une sélection parmi l'ensemble des composés existants et susceptibles de comporter l'élément dopant. Cette sélection est opérée en considérant une donnée physique spécifique, à savoir la distance minimale ($d_{min}$). Grâce aux choix de cette distance minimale, de meilleurs résultats sur les propriétés optiques des matériaux sont obtenus.

Le procédé conforme à l'invention fournit un matériau dans lequel les éléments dopants qui, même s'ils ne sont pas répartis de manière essentiellement homogène, présentent une interaction ion-ion inférieure à celle procurée par l'art antérieur. Sans vouloir être liée à de quelconques explications théoriques, la Demanderesse suppose que, grâce à cette distribution spatiale, on pourrait expliquer la diminution des pertes optiques pour le matériau selon l'invention par rapport au matériau obtenu conformément aux procédés de la technique antérieure, ceci pour de fortes concentrations $c_0$.

Le modèle statistique d'une répartition homogène des atomes dopants procure la relation suivante entre $d_{min}$ et $c_o$,

$$d_{min} = 6,17 \times 10^7 \, (c_o)^{-1/3}.$$

Dans cette relation, $d_{min}$ est exprimée en angström (Å) et $c_o$ en $cm^{-3}$.

On a rassemblé, dans le tableau I ci-après, les distances minimales théoriques ($d_{min}$, théo) données par cette relation pour diverses concentrations ($c_o$).

Tableau I

| $d_{min}$, théo (Å) | $c_o$ ($cm^{-3}$) |
|---|---|
| 61,7 | $10^{18}$ |
| 13,4 | $10^{20}$ |
| 6,17 | $10^{21}$ |

On observe que la distance minimale ($d_{min}$) des composants dopants définie dans le cadre de la présente invention reste inférieure à la distance ($d_{min, théo}$) provenant de la théorie.

Par conséquent, ce modèle statistique, loin d'orienter la Demanderesse vers le présent procédé, aurait pu l'écarter au contraire d'une telle entreprise et créait un préjugé qu'ont dû vaincre les inventeurs.

La Demanderesse pense que les atomes associés à la terre rare dans le composé de départ servent, en fait, à fixer un écartement entre les atomes de terres rares avant et après la fusion du deuxième composé. Ainsi, même en cas de répartition non homogène des atomes de terres rares dans le deuxième composé, leurs distances minimales dans le matériau vitreux sont plus élevées que dans les matériaux vitreux actuels.

Il s'agit, là encore, d'un avantage considérable de la présente invention.

On a rassemblé dans le tableau II ci-après, la distance minimale ($d_{min}$) associée à certains composés. On a énuméré d'abord certains composés utilisables dans le cadre de la présente invention et, ensuite, les composés utilisés conformément à l'art antérieur.

On note que la distance minimale ($d_{min}$) a été évaluée, en principe, par des méthodes cristallographiques classiques, telles que la diffraction.

Tableau II

| Composé dopant selon l'invention | $d_{min}$ (Å) |
|---|---|
| $X K_5 Li_2 F_{10}$ | 6,7 |
| $Na_5 X (WO_4)_4$ | 6,45 |
| $X Al_3 B_4 O_{12}$ | 5,9 |
| $X Li P_4 O_{12}$ | 5,6 |
| $X K P_4 O_{12}$ | 5,6 |
| $X P_5 O_{14}$ | 5,2 |

Tableau II   (suite)

| Composé dopant selon l'art antérieur | $d_{min}$ (Å) |
|---|---|
| $X_2 O_3$ | 3,5 |
| $X F_3$ | 3,6 |

Des inconvénients relatifs à une répartition non homogène sont décrits et expliqués dans la référence P. Blixt, J. Nilson, J. Carlnäs, and B. Jaskorzynska, IEEE Trans. Photon. Techn., 3, (1991) 996.

Dans l'hypothèse d'une dissolution non homogène du dopant, un amas d'atomes dopants peut être constitué par le composé de départ utilisé pour introduire le dopant. Il peut également être constitué par des atomes dopants au moins autant éloignés les uns des autres que dans ce composé de départ. Dans les deux cas, les distances minimales entre atomes dopants du matériau vitreux sont les mêmes que dans la molécule dopante.

Pour certains matériaux, on ignore la valeur de la distance minimale ($d_{min}$). En effet, sa connaissance requiert la détermination de la structure cristallographique du matériau lui-même. Cette dernière demeure parfois inconnue, puisqu'elle peut, par exemple, être trop difficile à mesurer.

En l'absence des valeurs des distances minimales, on se réfère aux valeurs du champ cristallin. En effet, il s'avère que les composés chimiques présentant une distance minimale élevée entre les atomes de terres rares sont des composés possédant un faible champ cristallin. La référence F.AUZEL, Mat. Res. Bul., 14, (1979) 223 illustre cette relation.

De préférence, chaque composé comprenant la ou les terre(s) rare(s) est tel que son champ cristallin (Nv) défini par $N_v = 4,35 \, \Delta E^{Nd}_{max}(^4I_{9/2})$,
où $\Delta E^{Nd}_{max}(^4I_{9/2})$ est l'écartement extrême des niveaux Stark révélés par le champ cristallin pour le niveau $^4I_{9/2}$ de l'ion $Nd^{3+}$ utilisé comme sonde locale de champ électrique,
est inférieur à environ 1950 cm$^{-1}$, de préférence inférieur à environ 1740 cm$^{-1}$, et plus préférentiellement encore inférieur à environ 1520 cm$^{-1}$.

Parmi les composés présentant un champ cristallin inférieur à 1950 cm$^{-1}$, on peut citer notamment :

$Na_2 X_2 Pb_6 (PO_4)_6 Cl_2$
$X Ta_7 O_{19}$
$K_2 X Li F_6$
$Na_5 X (MO_4)_4$

où X est une terre rare et M un métal choisi dans le groupe comprenant Mo et W.

Plus préférentiellement, on utilise, comme deuxième composition, une composition contenant, sous forme cristalline, chaque composé comprenant la ou les terre(s) rare(s).

Avantageusement, on met en oeuvre, en tant que terre(s) rare(s), au moins un élément choisi dans le groupe comprenant le lanthane, le cérium, le praséodyme, le néodyme, le samarium, l'europium, le gadolinium, le terbium, le dysprosium, l'holmium, l'erbium, le thulium et l'ytterbium.

Plus avantageusement, on utilise, comme deuxième composition, la composition de composé(s) minéraux choisi(s) dans le groupe comprenant :

$X K_5 Li_2 F_{10}$
$X K_5 Li_2 Cl_{10}$
$X Al_3 B_4 O_{12}$
$X Li P_4 O_{12}$
$X K P_4 O_{12}$
$X P_5 O_{14}$
$Na_2 X_2 Pb_6 (PO_4)_6 Cl_2$
$X Ta_7 O_{19}$
$K_2 X Li F_6$
$K_2 X Li Cl_6$, et
$Na_5 X (MO_4)_4$, M étant un métal choisi dans le groupe comprenant
W et Mo ;

où X est une terre rare.

Plus avantageusement encore, on utilise, comme deuxième composition, une composition de composé(s) organique(s) tel(s) que dmin soit selon l'invention et on met en oeuvre une température et/ou un temps de fusion suffisants, pour éliminer des résidus organiques éventuels (C et H) dans le matériau vitreux dopé obtenu. Ou mieux, on utilise de tels composés siliconés où C est remplacé par Si.

Le procédé conforme à l'invention réduit l'effet des amas de dopants lors de l'introduction du dopage par les ions actifs de terres rares. Cet effet est particulièrement exploitable dans les verres à usage de l'amplification optique, surtout lorsqu'on souhaite une courte longueur active d'amplification qui nécessite en retour une forte concentration en ions actifs.

Selon un premier mode de mise en oeuvre avantageux du procédé selon l'invention, on met en oeuvre une première composition comprenant un ou plusieurs constituant(s) choisi(s) dans le groupe comprenant l'oxyde de phosphore ($P_2O_5$), l'oxyde de magnésium (MgO) et l'oxyde de lithium ($Li_2O$), afin d'obtenir un verre au phosphate dopé.

Selon un deuxième mode de mise en oeuvre avantageux du procédé selon l'invention, on met en oeuvre une première composition comprenant un ou plusieurs constituant(s) choisi(s) dans le groupe comprenant le fluorure de magnésium ($MgF_2$), le fluorure de calcium ($CaF_2$), le fluorure de baryum ($BaF_2$), le fluorure d'aluminium ($AlF_3$), l'oxyde de phosphore ($P_2O_5$), l'oxyde de lanthane ($La_2O_3$) et l'oxyde de sodium ($Na_2O_3$), afin d'obtenir un verre au fluorophosphate dopé.

Selon un troisième mode de mise en oeuvre avantageux du procédé selon l'invention, on met en oeuvre une première composition comprenant un ou plusieurs constituant(s) choisi(s) dans le groupe comprenant l'oxyde de phosphore ($P_2O_5$), l'oxyde de lithium ($Li_2O$), l'oxyde de sodium ($Na_2O_3$), l'oxyde de magnésium (MgO), et l'oxyde de tungstène ($WO_3$), afin d'obtenir un verre au phosphotungstate dopé.

Divers types de constituants nécessaires à la fabrication d'un matériau vitreux peuvent former le premier composé. On peut mettre en oeuvre des oxydes de divers éléments, leur proportion dans le premier mélange étant variable.

De préférence, on utilise, comme deuxième composition, une composition contenant la ou les terre(s) rare(s) dans au moins un composé fluoré, pour fabriquer un matériau vitreux à base de fluorures ou de fluoro-oxydes, et on utilise, comme deuxième composition, une composition contenant la ou les terre(s) rare(s) dans au moins un composé oxydé, pour fabriquer un matériau vitreux à base d'oxydes ou de fluoro-oxydes.

En somme, on choisit la nature de la deuxième composition selon le type de matériau que l'on souhaite obtenir.

Avantageusement, on met en oeuvre la première composition et la deuxième composition dans une proportion telle que le rapport en poids de la deuxième composition à la première composition soit compris entre 2 et 60 %, de préférence compris entre 8 et 40 %, selon le type de composant dopant, afin d'obtenir un matériau vitreux présentant une concentration atomique ($c_0$) en terre(s) rare(s) supérieure à $6.10^{20}$ cm$^{-3}$.

Certains verres de compositions spécifiques ont été préparés, à partir de diverses compositions.

De manière avantageuse, on met en oeuvre :

(i) une première composition sous forme de poudre comprenant, en proportion relative en poids :

. entre 75 et 85 % d'oxyde de phosphore ($P_2O_5$), et de préférence environ 81 %,
. entre 3 et 12 % d'oxyde de magnésium (MgO), et de préférence environ 7 %,
. entre 8 et 16 % d'oxyde de lithium ($Li_2O$), et de préférence environ 12 %, avec

(ii) une deuxième composition sous forme de poudre du composé $Er\ P_5\ O_{14}$ cristallisé,

le rapport en poids de la deuxième poudre à la première poudre étant voisin de 22,8 % en poids, afin d'obtenir un verre au phosphate dopé présentant une concentration atomique ($c_0$) en erbium égale à $6,24.10^{20}$ cm$^{-3}$.

Selon un autre mode de mise en oeuvre avantageux du procédé conforme à l'invention, on met en oeuvre :

(i) une première composition sous forme de poudre comprenant, en proportion relative en poids :

. entre 7 et 17 % de fluorure de magnésium ($MgF_2$), et de préférence environ 12 %,
. entre 9 et 19 % de fluorure de calcium ($CaF_2$), et de préférence environ 15 %,
. entre 28 et 38 % de fluorure de baryum ($BaF_2$), et de préférence environ 34 %,
. entre 16 et 26 % de fluorure d'aluminium ($AlF_3$), et de préférence environ 22 %,
. entre 6 et 16 % d'oxyde de phosphore ($P_2O_5$), et de préférence environ 11 %,
. entre 0,1 et 1,5 % d'oxyde de lanthane ($La_2O_3$), et de préférence environ 1 %,
. entre 1 et 10 % d'oxyde de sodium ($Na_2O_3$), et de préférence environ 5 %,

(ii) une deuxième composition sous forme de poudre du composé $Er\ P_5\ O_{14}$ cristallisé,

le rapport en poids de la deuxième poudre à la première poudre étant de 27,6 %, afin d'obtenir un verre au fluorophosphate dopé présentant une concentration atomique ($c_0$) en erbium égale à $8,8.10^{20}$ cm$^{-3}$.

Selon encore un autre mode de mise en oeuvre avantageux, on met en oeuvre :

(i) une première composition sous forme de poudre comprenant, en proportion relative en poids :

- entre 50 et 60 % d'oxyde de phosphore ($P_2O_5$), et de préférence environ 55 %,
- entre 3 et 12 % d'oxyde de lithium ($Li_2O$), et de préférence environ 8 %;
- entre 1 et 8 % d'oxyde de sodium ($Na_2O_3$), et de préférence environ 5 %,
- entre 2 et 10 % d'oxyde de magnésium (MgO), et de préférence environ 6 %,
- entre 21 et 30 % d'oxyde de tungstène ($WO_3$), et de préférence environ 26 %, avec

(ii) une deuxième composition sous forme de poudre du composé $Na_5 Er (WO_4)_4$ cristallisé,

le rapport en poids de la deuxième poudre à la première poudre étant de 53,26 %, afin d'obtenir un verre au phosphotungstate dopé présentant une concentration atomique ($c_o$) en erbium égale à $8.10^{20}$ $cm^{-3}$.

Le matériau susceptible d'être obtenu par la mise en oeuvre du procédé conforme à l'invention est essentiellement exempt d'amas de terres rares présentant une distance minimale entre atomes de terres rares inférieure à environ 3,5 Å et que sa concentration atomique en terres rares est supérieure à environ $10^{17}$ $cm^{-3}$, et de préférence supérieure à environ $10^{20}cm^{-3}$.

On l'utilise comme constituant de dispositifs d'amplification d'ondes optiques ou d'ondes lasers, notamment de guides d'ondes ou de fibres.

On peut réaliser des amplificateurs de guides d'ondes comprenant un matériau vitreux selon la présente invention. On peut également réaliser des fibres optiques comprenant au moins un matériau vitreux conforme à la présente invention.

L'invention pourra être mieux comprise à l'aide des exemples non limitatifs qui suivent et qui constituent des modes de mise en oeuvre préférentiels du procédé selon l'invention.

<u>Exemple comparatif 1</u> : Verre au phosphate dopé par de l'erbium.

On met en oeuvre le procédé conforme à l'invention pour fabriquer un verre au phosphate dopé par de l'erbium. Pour cela, on utilise une première poudre renfermant les constituants rapportés dans le tableau 1.1 ci-après.

Tableau 1.1

| Constituant | $P_2O_5$ | MgO | $Li_2O$ |
|---|---|---|---|
| % relatif en poids | 80,99 | 7,65 | 11,36 |

On mélange cette première poudre avec une deuxième poudre du composé $Er P_5 O_{14}$ cristallisé. On met en oeuvre une proportion de la deuxième poudre par rapport à la première poudre, égale à environ 22,8 %.

On obtient ainsi un verre au phosphate dopé par de l'erbium à la concentration $c_o$ égale à $6,24.10^{20}$ $cm^{-3}$. Ce verre dopé constitue le verre A.

Par ailleurs, on met en oeuvre le procédé de la technique antérieure, afin de fabriquer un verre de composition quantitative identique.

Pour cela, on mélange la première poudre dont la composition est indiquée dans le tableau 1.1 avec, cette fois, de l'oxyde d'erbium de formule $Er_2O_3$. On met en oeuvre une proportion de la deuxième poudre par rapport à la première poudre, égale à 8 %.

On obtient, à nouveau, un verre au phosphate dopé par de l'erbium à la même concentration $c_o$ égale à $6,24.10^{20}$ $cm^{-3}$. Ce verre constitue le verre B.

Pour comparer les verres A et B, on mesure leur taux d'auto-extinction par concentration.

On rappelle que le taux d'auto-extinction par concentration réduit le rendement quantique de l'émission pour une longueur d'onde égale à 1,55 µm. De manière connue en soi, il limite l'usage de ces verres à de telles concentrations dans les amplificateurs à ondes guidées.

Le taux d'auto-extinction, noté $R_Q$, est défini de la manière suivante :

$$R_Q = 1/\tau_{faible} - 1/\tau_{forte}$$

où

$\tau_{forte}$ est la durée de vie mesurée pour l'émission à la longueur d'onde égale à 1,55 μm et pour une concentration de $6,24.10^{20}$ cm$^{-3}$ en ion erbium,

et

$\tau_{faible}$ est la durée de vie mesurée pour l'émission à la longueur d'onde égale à 1,55 μm et pour une concentration faible de $1,56.10^{19}$ cm$^{-3}$.

Les taux d'auto-extinction mesurés pour les verres A et B sont rapportés dans le tableau 1.2 ci-après.

Tableau 1.2

| Verre | A | B |
|---|---|---|
| $R_Q(s^{-1})$ | 563 | 916 |

On observe que le verre A, obtenu conformément au procédé selon l'invention, présente un taux d'auto-extinction nettement inférieur à celui du verre B obtenu conformément au procédé selon l'art antérieur. En effet, le taux d'auto-extinction par concentration a été réduit d'un facteur 1,6. Il s'agit là d'un avantage notable que procure la présente invention.

Exemple comparatif 2 : Verre au fluorophosphate dopé par de l'erbium.

On met en oeuvre le procédé conforme à l'invention pour réaliser un verre au fluorophosphate dopé par de l'erbium.
On opère de la même façon que pour le premier exemple, en utilisant une première poudre dont la composition est indiquée dans le tableau 2.1.

Tableau 2.1

| Constituant | $MgF_2$ | $CaF_2$ | $BaF_2$ | $AlF_3$ | $P_2O_3$ | $La_2O_3$ | $Na_2O_3$ |
|---|---|---|---|---|---|---|---|
| % relatif en poids | 12,5 | 14,87 | 33,41 | 21,9 | 11,8 | 0,85 | 4,67 |

On mélange cette première poudre avec une deuxième poudre du composé $Er\,P_5\,O_{14}$ cristallisé. On met en oeuvre une proportion de la deuxième poudre par rapport à la première poudre, égale à 27,6 %.
On obtient ainsi un verre au fluorophosphate dopé par de l'erbium à la concentration $c_o$ égale à $8,8.10^{20}$ cm$^{-3}$. Ce verre dopé constitue le verre C.
Comme pour le premier exemple, on met en oeuvre le procédé conforme à la technique antérieure pour réaliser un verre de composition quantitative identique. On utilise, comme deuxième poudre, de l'oxyde d'erbium de formule $Er_2O_3$. On utilise une première poudre de composition indiquée dans le tableau 2.1. On met en oeuvre les deux poudres dans une proportion telle que le rapport relatif en poids de la deuxième par rapport à la première soit égal à 8 % et donne encore une concentration atomique de $c_o$ égale à $8,8.10^{20}$ cm$^{-3}$. On obtient ainsi un verre D.
On mesure encore les taux d'auto-extinction des verres C et D pour un $\tau_{faible}$ correspondant à $2,3.10^{19}$ cm$^{-3}$. Les résultats sont rassemblés dans le tableau 2.2 ci-après.

Tableau 2.2

| Verre | C | D |
|---|---|---|
| $R_Q(s^{-1})$ | 20 | 64 |

A nouveau, on observe que le procédé conforme à l'invention apporte une amélioration nette sur le taux d'auto-extinction du verre dopé. L'amélioration se traduit par une réduction de ce taux par un facteur égal à 3,2.

Exemple comparatif 3: Verre au phosphotungstate dopé par de l'erbium.

On opère suivant le même protocole que pour les deux premiers exemples.
On réalise un verre au phosphotungstate dopé par de l'erbium à la concentration $c_o$ égale à $8.10^{20}$ cm$^{-3}$ conformément au procédé selon l'invention. A cette fin, on utilise une première poudre dont la composition est rapportée dans le tableau 3.1 ci-après.

Tableau 3.1

| Constituant | $P_2O_5$ | $Li_2O$ | $Na_2O_3$ | MgO | $WO_3$ |
|---|---|---|---|---|---|
| % relatif en poids | 55,77 | 7,82 | 4,46 | 5,26 | 26,69 |

Cette première poudre est mélangée avec une deuxième poudre du composé $Na_5\,Er(WO_4)_4$ cristallisé. La proportion de la deuxième poudre par rapport à la première poudre, dans le mélange, est de 53,26 % en poids.

On obtient ainsi le verre E de concentration $c_0$ égale à $8.10^{20}$ cm$^{-3}$.

On réalise un verre identique du point de vue quantitatif en utilisant le procédé selon la technique antérieure.

A cette fin, on mélange la première poudre de composition donnée dans le tableau 3.1 avec une deuxième poudre d'oxyde d'erbium de formule $Er_2O_3$. La proportion en poids de la deuxième poudre par rapport à la première poudre est de 5,4 %. On obtient ainsi le verre F de concentration $c_o$ égale à $8.10^{20}$ cm$^{-3}$.

Les résultats des mesures d'auto-extinction sont rapportés dans le tableau 3.2 ci-après.

Tableau 3.2

| Verre | E | F |
|---|---|---|
| $R_Q(s^{-1})$ | 473 | 892 |

Ces mesures sont réalisées à partir d'une concentration dite faible de $1,56.10^{19}$ cm$^{-3}$.

On observe, une fois encore, que le procédé conforme à l'invention procure une nette amélioration du taux d'auto-extinction du matériau dopé. Il s'agit, pour cet exemple, d'une amélioration d'un facteur approximativement égal à 2.

Par conséquent, ces exemples montrent que le procédé conforme à l'invention fournit des matériaux dont les propriétés physiques, liées à la répartition homogène des atomes de terres rares, sont nettement améliorées.

**Revendications**

1. Procédé de fabrication d'un matériau vitreux dopé par au moins une terre rare à une concentration atomique ($c_o$) et destiné à être utilisé, en particulier, pour l'amplification d'ondes optiques ou d'ondes lasers, comprenant les opérations consistant à :

    (1) mélanger entre elles

       (i) une première composition comprenant les constituants nécessaires à la fabrication d'un matériau vitreux, et
       (ii) une deuxième composition contenant au moins un composé comprenant la ou les terre(s) rare(s),

    (2) mettre en fusion le mélange obtenu, et
    (3) faire refroidir le mélange fondu, selon les techniques verrières classiques,

    caractérisé par le fait que ledit ou lesdits composé(s) contenu(s) dans la deuxième composition présente(nt) une distance minimale ($d_{min}$) entre les atomes de terres rares supérieure à 3,7 Å, et de préférence comprise entre 5 et 20 Å.

2. Procédé selon la revendication 1, caractérisé par le fait que chaque composé comprenant la ou les terre(s) rare(s) est tel que son champ cristallin ($N_v$) défini par $N_v = 4,35\,\Delta E^{Nd}{}_{max}(^4I_{9/2})$, où $\Delta E^{Nd}{}_{maX}(^4I_{9/2})$ est l'énergie séparant les niveaux Stark extrêmes du niveau $^4I_{9/2}$ de l'ion $Nd^{3+}$ pris comme sonde locale de champ électrique, est inférieur à environ 1950 cm$^{-1}$, de préférence inférieur à environ 1740 cm$^{-1}$, et plus préférentiellement encore inférieur à environ 1520 cm$^{-1}$.

3. Procédé selon l'une quelconque des revendications précédentes, caractérisé par le fait qu'on utilise, comme deuxième composition, une composition contenant, sous forme cristalline, chaque composé comprenant la ou les terre(s) rare(s).

4. Procédé selon l'une quelconque des revendications précédentes, caractérisé par le fait qu'on met en oeuvre, en tant que terre(s) rare(s), au moins un élément choisi dans le groupe comprenant le lanthane, le cérium, le praséodyme, le néodyme, le samarium, l'europium, le gadolinium, le terbium, le dysprosium, l'holmium, l'erbium, le thulium et l'ytterbium.

5. Procédé selon l'une quelconque des revendications précédentes, caractérisé par le fait qu'on utilise, comme deuxième composition, la composition de composé(s) minéraux choisi(s) dans le groupe comprenant :

$X K_5 Li_2 F_{10}$
$X K_5 Li_2 Cl_{10}$
$X Al_3 B_4 O_{12}$
$X Li P_4 O_{12}$
$X K P_4 O_{12}$
$X P_5 O_{14}$
$Na_2 X_2 Pb_6 (PO_4)_6 Cl_2$
$X Ta_7 O_{19}$
$K_2 X Li F_6$
$K_2 X Li Cl_6$, et
$Na_5 X (MO_4)_4$, M étant un métal choisi dans le groupe comprenant
W et Mo ;

où X est une terre rare.

6. Procédé selon l'une quelconque des revendications 1 à 4, caractérisé par le fait qu'on utilise, comme deuxième composition, une composition de composé(s) organique(s), de préférence siliconés où C est remplacé par Si, et on met en oeuvre une température et/ou un temps de fusion suffisants, pour éliminer des résidus organiques éventuels (C et H) dans le matériau vitreux dopé obtenu.

7. Procédé selon l'une quelconque des revendications précédentes, caractérisé par le fait qu'on met en oeuvre une première composition comprenant un ou plusieurs constituant(s) choisi(s) dans le groupe comprenant l'oxyde de phosphore ($P_2O_5$), l'oxyde de magnésium (MgO) et l'oxyde de lithium ($Li_2O$), afin d'obtenir un verre au phosphate dopé.

8. Procédé selon l'une quelconque des revendications 1 à 6, caractérisé par le fait qu'on met en oeuvre une première composition comprenant un ou plusieurs constituant(s) choisi(s) dans le groupe comprenant le fluorure de magnésium ($MgF_2$), le fluorure de calcium ($CaF_2$), le fluorure de baryum ($BaF_2$), le fluorure d'aluminium ($AlF_3$), l'oxyde de phosphore ($P_2O_5$), l'oxyde de lanthane ($La_2O_3$) et l'oxyde de sodium ($Na_2O_3$), afin d'obtenir un verre au fluorophosphate dopé.

9. Procédé selon l'une quelconque des revendications 1 à 6, caractérisé par le fait qu'on met en oeuvre une première composition comprenant un ou plusieurs constituant(s) choisi(s) dans le groupe comprenant l'oxyde de phosphore ($P_2O_5$), l'oxyde de lithium ($Li_2O$), l'oxyde de sodium ($Na_2O_3$), l'oxyde de magnésium (MgO), et l'oxyde de tungstène ($WO_3$), afin d'obtenir un verre au phosphotungstate dopé.

10. Procédé selon la revendication 1, caractérisé par le fait qu'on utilise, comme deuxième composition, une composition contenant la ou les terre(s) rare(s) dans au moins un composé fluoré, pour fabriquer un matériau vitreux à base de fluorures ou de fluoro-oxydes, et on utilise, comme deuxième composition, une composition contenant la ou les terre(s) rare(s) dans au moins un composé oxydé, pour fabriquer un matériau vitreux à base d'oxydes ou de fluoro-oxydes.

11. Procédé selon l'une quelconque des revendications précédentes, caractérisé par le fait qu'on met en oeuvre la première composition et la deuxième composition dans une proportion telle que le rapport en poids de la deuxième composition à la première composition soit compris entre 2 et 60 %, de préférence compris entre 8 et 40 %, afin d'obtenir un matériau vitreux présentant une concentration atomique ($c_o$) en terre(s) rare(s) supérieure à $6.10^{20}$ $cm^{-3}$.

12. Procédé selon la revendication 7, caractérisé par le fait qu'on met en oeuvre :

(i) une première composition sous forme de poudre comprenant, en proportion relative en poids :

- entre 75 et 85 % d'oxyde de phosphore ($P_2O_5$), et de préférence environ 81 %,
- entre 3 et 12 % d'oxyde de magnésium (MgO), et de préférence environ 7 %,
- entre 8 et 16 % d'oxyde de lithium ($Li_2O$), et de préférence environ 12 %, avec

(ii) une deuxième composition sous forme de poudre du composé $Er\,P_5\,O_{14}$ cristallisé,

le rapport en poids de la deuxième poudre à la première poudre étant voisin de 22,8 % en poids, afin d'obtenir un verre au phosphate dopé présentant une concentration atomique ($c_o$) en erbium égale à $6,24.10^{20}\ cm^{-3}$.

**13.** Procédé selon la revendication 8, caractérisé par le fait qu'on met en oeuvre :

(i) une première composition sous forme de poudre comprenant, en proportion relative en poids :

- entre 7 et 17 % de fluorure de magnésium ($MgF_2$), et de préférence environ 12 %,
- entre 9 et 19 % de fluorure de calcium ($CaF_2$), et de préférence environ 15 %,
- entre 28 et 38 % de fluorure de baryum ($BaF_2$), et de préférence environ 34 %,
- entre 16 et 26 % de fluorure d'aluminium ($AlF_3$), et de préférence environ 22 %,
- entre 6 et 16 % d'oxyde de phosphore ($P_2O_5$), et de préférence environ 11 %,
- entre 0,1 et 1,5 % d'oxyde de lanthane ($La_2O_3$), et de préférence environ 1 %,
- entre 1 et 10 % d'oxyde de sodium ($Na_2O_3$), et de préférence environ 5 %,

(ii) une deuxième composition sous forme de poudre du composé $Er\,P_5\,O_{14}$ cristallisé,

le rapport en poids de la deuxième poudre à la première poudre étant de 27,6 %, afin d'obtenir un verre au fluorophosphate dopé présentant une concentration atomique ($c_o$) en erbium égale à $8,8.10^{20}\ cm^{-3}$.

**14.** Procédé selon la revendication 9, caractérisé par le fait qu'on met en oeuvre :

(i) une première composition sous forme de poudre comprenant, en proportion relative en poids :

- entre 50 et 60 % d'oxyde de phosphore ($P_2O_5$), et de préférence environ 55 %,
- entre 3 et 12 % d'oxyde de lithium ($Li_2O$), et de préférence environ 8 %;
- entre 1 et 8 % d'oxyde de sodium ($Na_2O_3$), et de préférence environ 5 %,
- entre 2 et 10 % d'oxyde de magnésium (MgO), et de préférence environ 6 %,
- entre 21 et 30 % d'oxyde de tungstène ($WO_3$), et de préférence environ 26 %, avec

(ii) une deuxième composition sous forme de poudre du composé $Na_5\,Er\,(WO_4)_4$ cristallisé,

le rapport en poids de la deuxième poudre à la première poudre étant de 53,26 %, afin d'obtenir un verre au phosphotungstate dopé présentant une concentration atomique ($c_o$) en erbium égale à $8.10^{20}\ cm^{-3}$.

**15.** Matériau vitreux dopé par au moins une terre rare et susceptible d'être obtenu par la mise en oeuvre du procédé selon l'une quelconque des revendications 1 à 14, caractérisé par le fait qu'il est essentiellement exempt d'amas de terres rares présentant une distance minimale entre atomes de terres rares inférieure à environ 3,5 Å et que sa concentration atomique en terres rares est supérieure à environ $10^{17}\ cm^{-3}$, et de préférence supérieure à environ $10^{20}\ cm^{-3}$.

**16.** Utilisation du matériau selon la revendication 15, comme constituant de dispositifs d'amplification d'ondes optiques ou d'ondes lasers, notamment de guides d'ondes ou de fibres.

**17.** Amplificateur de guides d'ondes comprenant un matériau vitreux selon la revendication 15.

**18.** Fibre optique comprenant au moins un matériau vitreux selon la revendication 15.

**Office européen des brevets**

**RAPPORT DE RECHERCHE EUROPEENNE**

Numéro de la demande

EP 97 40 2564

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | DENKER B I ET AL: "Concentrated neodymium laser glasses (review)" SOVIET JOURNAL OF QUANTUM ELECTRONICS, vol. 8, no. 3, mars 1981, US, pages 289-297, XP002035617 * tableau II * | 1-5,7, 11,15-18 | H01S3/17 C03C4/00 |
| X | EP 0 294 977 A (BRITISH TELECOMM) 14 décembre 1988 * abrégé; revendications 1-4,6,8,9 * | 1-5, 15-18 | |

**DOMAINES TECHNIQUES RECHERCHES (Int.Cl.6)**

H01S
C03C

Le présent rapport a été établi pour toutes les revendications

| Lieu de la recherche | Date d'achèvement de la recherche | Examinateur |
|---|---|---|
| LA HAYE | 9 février 1998 | Galanti, M |